# NOUVEAU FASCICULE DE BREVET EUROPEEN

(11) **EP 3 586 045 B2**
(45) Date de publication et mention de la décision concernant l'opposition: **17.04.2024**
(45) Mention de la délivrance du brevet: 31.03.2021
(21) Numéro de dépôt: 18707084.2
(22) Date de dépôt: 05.02.2018
(51) Int. Cl.: F16J 1/16

(54) **DISPOSITIF DE TRANSMISSION DE MOUVEMENT POUR MOTEUR THERMIQUE**
BEWEGUNGSÜBERTRAGUNGSVORRICHTUNG FÜR EINEN VERBRENNUNGSMOTOR
MOVEMENT TRANSMISSION DEVICE FOR A COMBUSTION ENGINE

(30) Priorité: 21.02.2017 FR 1751356
(43) Date de publication de la demande: 01.01.2020
(73) Titulaire: Stellantis Auto SAS, 78300 Poissy (FR); HYDROMECANIQUE ET FROTTEMENT, 42160 Andrézieux-Bouthéon (FR)
(72) Inventeur: DIABY, Moussa, 78330 Fontenay le Fleury (FR); HENRY, Sandrine, 42740 Saint-Paul-en-Jarez (FR); PROST, Fabrice, 42000 Saint Etienne (FR)
(86) Numéro de dépôt international: PCT/FR2018/050280
(87) Numéro de publication internationale: WO 2018/154207

(56) Documents cités:
- EP-A1- 1 783 349
- EP-A1- 2 647 738
- EP-B1- 1 170 470
- EP-B1- 1 484 534
- EP-B1- 1 829 986
- EP-B1- 2 771 594
- WO-A1-2006/061013
- WO-A1-2008/080543
- WO-A1-2009/144076
- WO-A1-2013/131939
- WO-A1-2015/114568
- CN-U- 204 113 473
- DE-A1-102005 061 063
- DE-A1-102011 102 209
- DE-B4-102010 051 682
- DE-C2- 4 111 368
- DE-U1-202013 002 328
- JP-A- 2001 271 705
- US-B1- 6 557 457

## Description

La présente invention porte sur un dispositif de transmission de mouvement pour moteur thermique. L'invention trouve une application particulièrement avantageuse, mais non exclusive, dans le domaine des véhicules automobiles, mais aussi dans le domaine de tout véhicule terrestre ou maritime.

La configuration actuelle de l'ensemble piston, axe de piston, et bielle, est généralement constituée par un piston en aluminium ayant l'avantage d'être léger et de présenter une bonne conduction thermique. Des pistons en acier sont également possibles, mais sont en général réservés aux moteurs diesels.

Un trou d'axe est alésé directement dans le piston et peut présenter différentes configurations permettant d'augmenter la tenue mécanique (profil, ovalité, fraisages, bague en bronze, etc.) et la résistance au grippage (profil, rainure, alimentation en huile).

L'axe de piston réalisé en acier, peut être recouvert d'un revêtement à faible coefficient de frottement. L'utilisation des revêtements de couche mince à base de carbone amorphe de type DLC (acronyme pour "Diamond Like Carbon" en anglais) sur les axes de piston s'est généralisée à la suite des sévérisations successives des normes environnementales (consommation et rejets de dioxyde de carbone). En effet, l'utilisation de ces revêtements permet de repousser la limite au grippage dans le contact piston/axe de piston, suite à l'augmentation des charges au niveau de ce contact, augmentation liée à la réduction de la cylindrée des moteurs (principe dit de "downsizing" en anglais). Voir DE-A-102011102209.

Les cycles actuels de mesure de la pollution et/ou de la consommation des véhicules, dits NEDC (acronyme pour "New European Driving Cycle", ou Nouveau cycle de conduite européen en français), ont entraîné une tendance au développement de moteurs de plus petite cylindrée mais développant autant de puissance.

Ces normes actuelles montrent toutefois des écarts de plus en plus importants entre les consommations mesurées lors des tests et les consommations réelles observées. Les cycles de test NEDC vont être remplacés par les cycles de tests, dits WLTP (acronyme pour "Worldwide harmonized Light vehicles Test Procedure" en anglais, ou Procédure de test harmonisé mondialement pour véhicule léger en français), et ces nouvelles normes, plus représentatives d'un cycle réel de conduite avec un profil de charge plus élevé, tendent à réduire l'écart entre les petits moteurs et les moteurs plus puissants. En effet, le cycle NEDC avait tendance à favoriser les moteurs de faible puissance. Au contraire, le cycle WLTP, par un enchaînement de phases à plus haut régimes et charges, montre qu'il devient intéressant de développer des moteurs présentant des puissances plus élevées. L'augmentation de la puissance des moteurs peut être atteinte, à iso-géométrie par l'augmentation de la puissance spécifique, ou par une augmentation de la cylindrée du moteur.

Sur une base de moteur existante, cette augmentation de cylindrée peut être générée de deux façons. Soit en augmentant l'alésage du cylindre du moteur qui est limité par la distance inter-fûts et les épaisseurs de matière minimum à respecter pour assurer la tenue mécanique de l'ensemble, soit en augmentant la course des pistons. Dans tous les cas, une augmentation de cylindrée à iso-géométrie ou une augmentation des puissances spécifiques, induit des pressions conséquentes au niveau des contacts piston/axe de piston, et bielle/axe de piston, avec une charge thermique plus élevée, et donc génère des risques accrus de grippage, notamment au niveau du contact piston/axe de piston.

Par ailleurs, afin de réduire la consommation en carburant des moteurs thermiques, les constructeurs font appel à des huiles à basse viscosité, et à l'utilisation massive de systèmes de recirculation des gaz d'échappement (système dit "EGR" pour l'acronyme de l'expression anglaise « Exhaust Gas Recirculation ») sur des points de charges élevées, ce qui a tendance à dégrader l'huile. Malgré la présence de revêtement à faible coefficient de frottement sur l'axe de piston, certaines applications présentent alors des usures excessives.

Certains organes, tels que la pompe à huile, peuvent également être pilotés pour permettre une rupture de l'alimentation en huile du piston sur des points de fonctionnement peu chargés. La répétition et la durée de cette désactivation de la lubrification peut engendrer des risques de grippage des axes des pistons. L'application d'un revêtement à faible coefficient de frottement sur l'axe de piston permet de repousser cette limite et d'étendre, dans une certaine mesure, la plage de pilotage de la pompe à huile. Toutefois, cette solution ne saurait répondre complètement aux différentes problématiques posées par l'augmentation des charges mécaniques sur le système par les cycles WLTP, qui prennent davantage en compte la dynamique du système.

L'invention vise à remédier efficacement aux inconvénients précités en proposant un dispositif mécanique de transmission de mouvement pour moteur thermique selon la revendication 1

L'invention permet ainsi, grâce à une réduction significative des frottements au niveau de la liaison axe de piston/piston, d'augmenter les performances du moteur. L'invention permet également de réaliser de nouvelles architectures plus compactes à nombre de composants réduit. En outre, l'invention autorise l'utilisation d'huile à très basse viscosité, ainsi que l'extension de la plage de pilotage de la pompe à huile.

Selon l'invention, on a alors un contact entre deux revêtements de surface à faible coefficient de frottement, ce qui est très favorable pour la réduction des frottements. Les revêtements peuvent alors être choisis de même composition, ou non.

Selon une réalisation, le revêtement de surface de type DLC de la famille a-C:H avec une teneur atomique en hydrogène comprise entre 20% à 30%, recouvre l'axe de piston.

Selon une réalisation, l'axe du piston et le trou d'axe sont recouverts par des revêtements différents, l'autre revêtement de surface (14a/14b) étant à base de carbone amorphe de type DLC de la famille ta-C contenant majoritairement une structure tétraédrique avec une teneur atomique en hydrogène inférieure à 5%. Cela permet également d'obtenir un bon compromis entre dureté et réduction des frottements entre les pièces.

Selon une réalisation, ce dernier revêtement de surface recouvre le trou d'axe du piston.

Selon une réalisation, la dureté de la couche de revêtement de surface à faible coefficient de frottement a tendance à augmenter suivant un gradient lorsque l'on se déplace du piston vers l'extérieur de la couche. Cela permet d'obtenir une transition optimale entre les propriétés mécaniques du piston et les propriétés mécaniques du revêtement proprement dit. En outre, cela permet également d'assurer l'adhérence du revêtement sur le piston

Selon une réalisation, une hauteur maximale d'un profil de rugosité de l'axe de piston est inférieure à 1 micromètre, et préférentiellement inférieure à 0.7 micromètre.

Selon une réalisation, une épaisseur de la couche de revêtement de surface à faible coefficient de frottement est comprise entre 1 micromètre et 3 micromètres.

Selon une réalisation, le piston est réalisé dans un matériau à base d'acier ou à base d'aluminium.

Selon une réalisation, l'axe de piston est réalisé dans un matériau à base d'acier.

Selon une réalisation, le piston comporte une jupe également recouverte d'une couche de revêtement de surface à faible coefficient de frottement.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'un dispositif mécanique de transmission de mouvement selon la présente invention comportant un piston et une bielle associée;
La figure 2a est une représentation graphique illustrant l'évolution d'un coefficient de frottement en fonction d'un nombre de cycles dans le cas respectivement d'un contact entre un trou d'axe en aluminium et un axe de piston recouvert par un revêtement de type DLC, et dans le cas d'un contact entre un trou d'axe et un axe de piston recouverts par le revêtement de type DLC;
La figure 2b est une représentation graphique illustrant l'évolution d'un coefficient de frottement en fonction d'une vitesse de glissement dans le cas respectivement d'un contact entre un trou d'axe en acier et un axe de piston recouvert par un revêtement de type DLC, et dans le cas d'un contact entre un trou d'axe et un axe de piston recouverts par le revêtement de type DLC;
La figure 3 est une représentation graphique illustrant un taux d'usure mesuré respectivement dans le cas d'un contact entre un trou d'axe en acier rectifié, poli, ou recouvert par le revêtement de type DLC et un axe de piston recouvert par le revêtement de type DLC;
Les figures 4a, 4b, et 4c sont des représentations graphiques illustrant un coefficient de frottement en fonction de vitesses de glissement de l'axe de piston par rapport au trou d'axe du piston, à différentes températures et pour différentes huiles de lubrification;
La figure 5 est une représentation graphique illustrant un coefficient de frottement en fonction de vitesses de glissement de l'axe de piston par rapport au trou d'axe du piston, dans le cas d'une huile de lubrification usagée;
La figure 6 est un diagramme illustrant les différentes familles de matériaux de type DLC et de leur teneur correspondante en hydrogène, en graphite (C sp2), et en diamant (C sp3);
La figure 7 est une représentation schématique illustrant les forces de poussée agissant sur l'axe de piston lors d'un pic de pression à l'intérieur d'un cylindre à la compression ou à l'explosion.

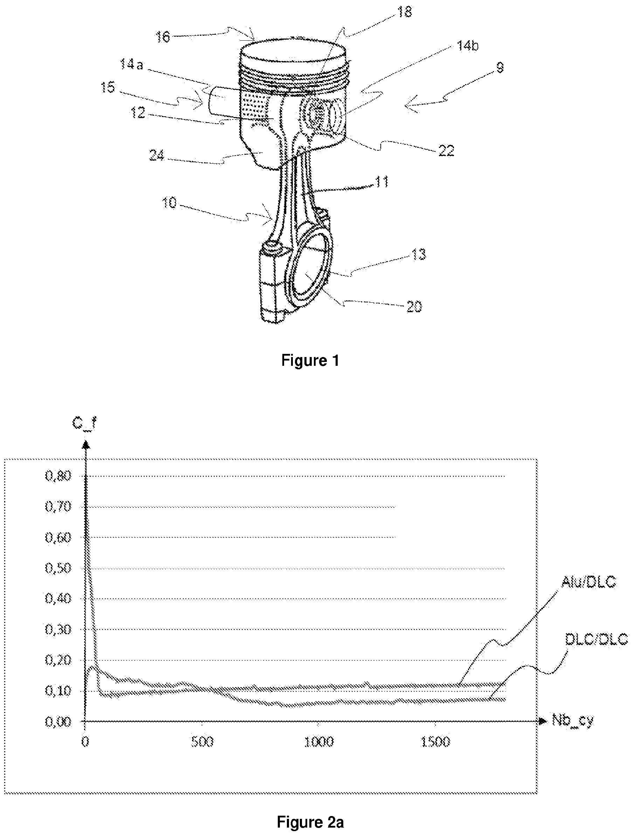

La figure 1 montre un dispositif mécanique de transmission de mouvement 9 comportant une bielle 10 de moteur thermique ayant un corps 11 muni à une de ses extrémités d'un pied de bielle 12 et à l'autre de ses extrémités d'une tête de bielle 13. Le pied de bielle 12 est destiné à coopérer avec un axe 15 d'un piston 16 du moteur via un alésage interne 18 tandis que la tête de bielle 13 est destinée à autoriser le passage d'un maneton d'un vilebrequin via un autre alésage interne 20.

Le piston 16 comporte un trou d'axe 22 permettant le passage de l'axe de piston 15. Ainsi, pour assurer une liaison rotative entre la bielle 10 et le piston 16, l'axe de piston 15 est inséré dans le trou d'axe 22 du piston 16 et dans l'alésage interne 18 du pied de bielle 12.

L'augmentation de la puissance du moteur, génère une forte augmentation de pression sur le piston 16 et des risques de grippages avérés. Ces risques de grippages surviennent dans un premier temps, au niveau du contact entre le piston 16 et l'axe de piston 15 recouvert par une couche d'un revêtement de surface 14a à faible coefficient de frottement de type DLC (acronyme pour "Diamond Like Carbon" en anglais), puis dans un deuxième temps, au niveau du contact entre la bielle 10 en acier et l'axe de piston 15 recouvert par le revêtement 14a, et ce malgré la présence du revêtement 14 sur l'axe de piston 15.

Comme cela est représenté sur la figure 2a, on remarque que dans le cas d'un contact entre un trou d'axe 22 recouvert par un revêtement 14b et un axe de piston 15 recouvert par un revêtement 14a (cas DLC/DLC), le coefficient de frottement C_f en fonction du nombre de cycle Nb_cy est globalement plus faible, que dans le cas d'un contact entre un trou d'axe 22 en aluminium et un axe de piston 15 recouvert par le revêtement 14a (cas Alu/DLC). On précise que dans les exemples de la figure 2a, les essais ont été réalisés à sec, c'est-à-dire sans agent lubrifiant.

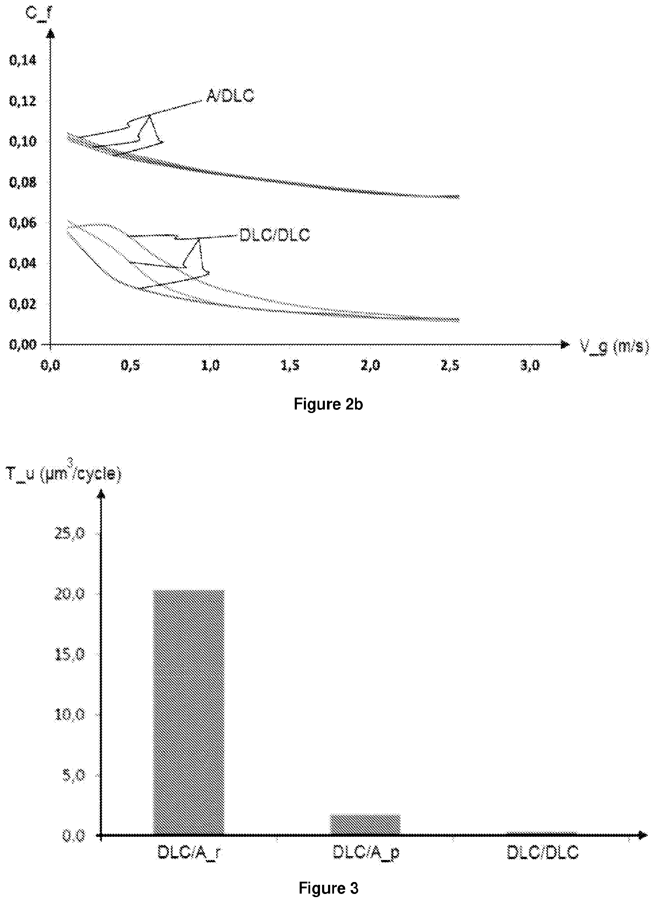

Comme cela est représenté sur la figure 2b, on remarque que dans le cas d'un contact entre un trou d'axe 22 recouvert par un revêtement 14b et un axe de piston 15 recouvert par un revêtement 14a (cas DLC/DLC), le coefficient de frottement C_f en fonction d'une vitesse de glissement V_g est plus faible que dans le cas d'un contact entre un trou d'axe 22 en acier et un axe de piston 15 recouvert par le revêtement 14a (cas A/DLC). On précise que dans les exemples de la figure 2b, les essais ont été réalisés avec un agent lubrifiant de type huile 5W30.

Dans le cas d'un montage avec un axe de piston 15 serré dans la bielle 10, on s'affranchit du risque de grippage dans la bielle 10. Un montage serré aurait également l'avantage supplémentaire de supprimer la bague en bronze généralement présente dans le cas d'un montage flottant de l'axe de piston 15, et donc de diminuer encore l'encombrement de l'ensemble.

Toutefois, du fait du blocage en rotation de l'axe de piston 15 dans la bielle 10, l'usure du revêtement 14 est amplifiée car la zone de contact n'est plus répartie sur toute la circonférence de l'axe de piston 15. Cette problématique est avérée dans le cas d'un contact entre un trou d'axe 22 en aluminium ou en acier et un axe de piston 15 recouvert par le revêtement 14a de type DLC, mais elle disparaît dans le cas d'un contact entre un trou d'axe 22 recouvert par un revêtement 14b et un axe de piston 15 recouvert par le revêtement 14a.

Comme cela est représenté sur la figure 3, on remarque que dans le cas d'un contact entre un trou d'axe 22 en acier rectifié et un axe de piston 15 recouvert par le revêtement 14a (cas DLC/A_r), le taux d'usure T u est d'environ 20 µm³/cycle, avec une rugosité moyenne arithmétique Ra égale à 0,2 µm. Dans le cas d'un contact entre un trou d'axe 22 en acier poli et un axe de piston 15 recouvert par le revêtement 14a (cas DLC/A_p), le taux d'usure T_u est d'environ 2,5 µm³/cycle, avec une rugosité moyenne arithmétique Ra égale à 0,02 µm. Dans le cas d'un contact entre un trou d'axe 22 recouvert par un revêtement 14b et un axe de piston 15 recouvert par un revêtement 14a (cas DLC/DLC), le taux d'usure T u est quasi nul. En effet, on observe que deux surfaces en contact recouvertes par des revêtements 14a/14b de type DLC ne présentent quasiment plus d'usure une fois la phase de rodage passée.

Par ailleurs, du fait de la présence d'un contact associé à une lubrification complexe, avec des huiles de très faible viscosité et rapidement dégradées, l'ajout d'un revêtement 14 avec des propriétés autolubrifiantes est recherché par le motoriste. La configuration utilisant un trou d'axe 22 recouvert par un revêtement 14b et un axe de piston 15 recouvert par un revêtement 14a permet de s'affranchir de ces différents paramètres, en garantissant un coefficient de frottement stable et reproductible, quelles que soient les conditions de lubrification du système.

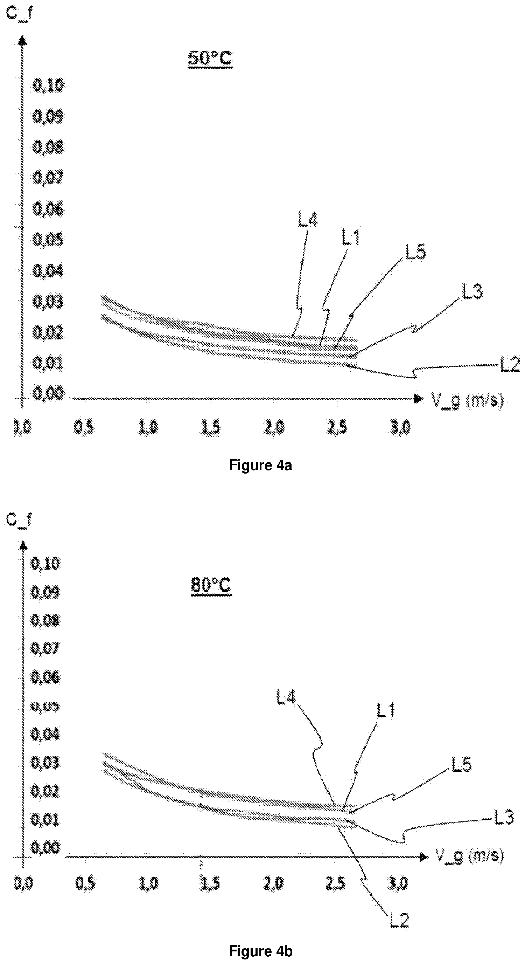

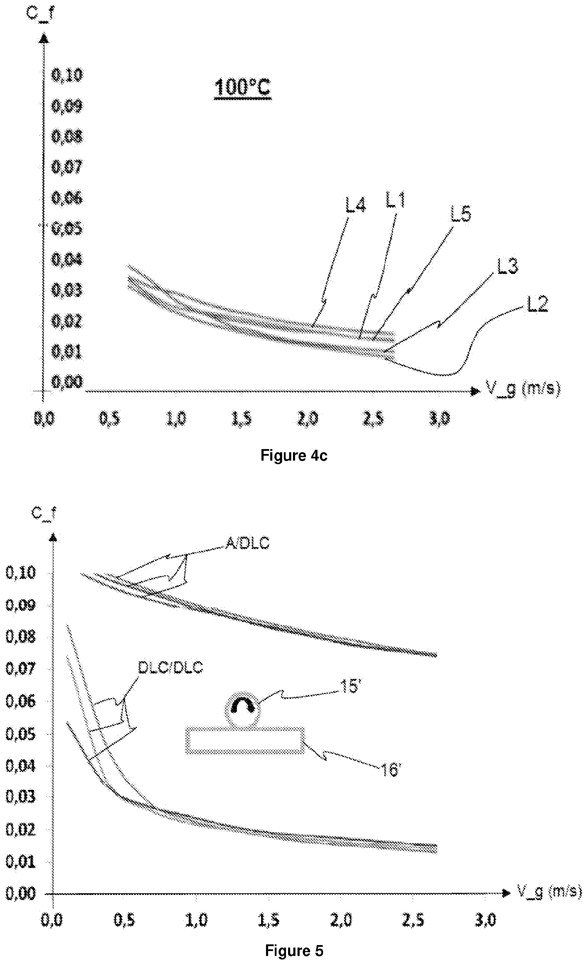

Ainsi, comme cela est représenté sur les figures 4a, 4b, et 4c, le coefficient de frottement C_f dans ce type de configuration est mesuré à différentes températures, respectivement à 50°C, 80°C, et 100°C, pour cinq lubrifiants différents L1, L2, L3, L4, L5, en fonction d'une vitesse de glissement V_g dans une configuration bague/plan dans un contact de type DLC/DLC.

A 50°C, les cinq lubrifiants L1, L2, L3, L4, L5 ont respectivement des viscosités cinématiques de 35 mm²/s pour L1, 30 mm²/s pour L2, L3, L4, et 20 mm²/s pour L5. A 80°C, les lubrifiants ont respectivement des viscosités cinématiques de 15 mm²/s pour L1, 13 mm²/s pour L2, L3, L4, et 10 mm²/s pour L5. A 100°C, les lubrifiants ont respectivement des viscosités cinématiques de 10 mm²/s pour L1, 8 mm²/s pour L2, L3, L4, et 7 mm²/s pour L5.

On remarque que quelles que soient la température et la nature du lubrifiant L1, L2, L3, L4, L5, dans le cas d'un contact entre un trou d'axe 22 recouvert par un revêtement 14b et un axe de piston 15 recouvert par un revêtement 14a, le coefficient de frottement C_f est maîtrisé et sensiblement constant dans une plage comprise entre 0,01 et 0,04.

+Par ailleurs, comme cela est représenté sur la figure 5, on remarque également que pour une huile usagée, un contact entre une bague 15' et un plan 16' de type DLC/DLC présente un coefficient de frottement C_f plus faible qu'un contact acier/DLC (cf. couple A/DCL sur la figure).

Dans le cas d'un moteur, comme toute machine tournante, les masses alternatives (piston, axe de piston, pied de bielle) génèrent des acyclismes qu'il est nécessaire de compenser par l'utilisation de contrepoids, d'arbres d'équilibrages, de poulie et de volant double. L'invention est capable de supporter des charges plus importantes qu'un système composé par un piston 16 en aluminium ou en acier et un axe de piston 15 recouvert par une couche de revêtement 14a de type DLC. Il permet donc de concevoir des systèmes plus légers et compacts (longueur d'axe réduite, diamètre inférieur, hauteur de compression du piston 16 réduite) avec de faibles niveaux d'acyclismes, permettant de simplifier, voire de supprimer certaines configurations d'équilibrage.

Dans un mode de réalisation particulier, une couche de revêtement 14 de type DLC est déposée dans le trou d'axe 22. De préférence, le revêtement 14 est composé d'une couche à gradient de propriétés permettant une transition optimale entre les propriétés mécaniques du substrat, en l'occurrence le piston 16, et les propriétés mécaniques du revêtement 14 proprement dit. En l'occurrence, la dureté de la couche de revêtement 14 a tendance à augmenter suivant un gradient lorsque l'on se déplace du piston 16 vers l'extérieur de la couche. Ce gradient permet également d'assurer une adhérence optimale du revêtement 14 sur le piston 16.

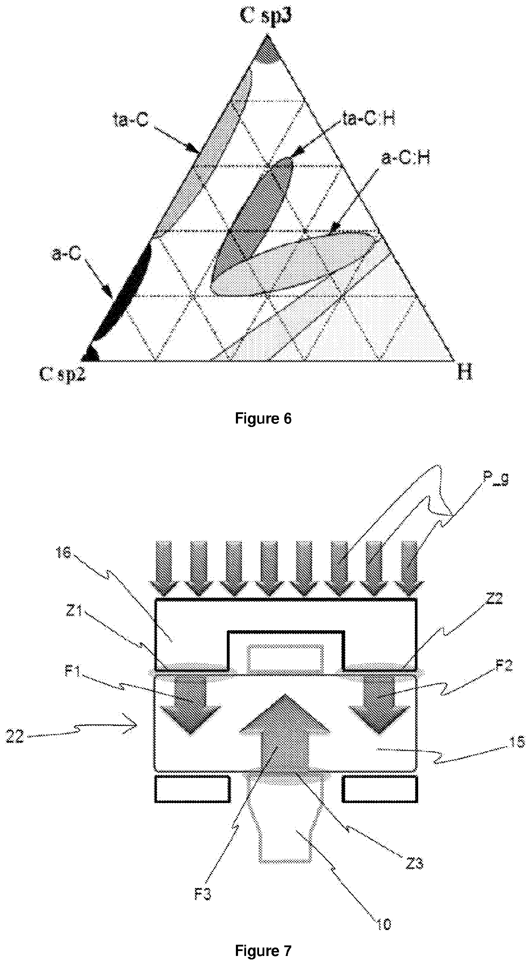

Comme cela est représenté sur la figure 6, le revêtement 14 est formé par trois éléments Csp2, Csp3, et H, correspondant aux trois sommets du triangle. Plus on se rapproche d'un sommet du triangle, plus la teneur de l'élément correspondant est importante.

On distingue une famille a-C:H principalement à base de graphite Csp2 présentant une teneur atomique en hydrogène élevée, et une famille correspondante a-C dite "non-hydrogénée" présentant une teneur atomique en hydrogène inférieure à 5%.

On distingue également une famille de type ta-C:H contenant majoritairement une structure tétraédrique à teneur atomique en hydrogène élevée, et une famille correspondante ta-C dite "non-hydrogénée" présentant une teneur atomique en hydrogène inférieure à 5%.

Pour la mise en œuvre de l'invention, on sélectionne pour au moins l'un des revêtements de l'axe du piston ou du trou d'axe la famille a-C:H avec une teneur atomique en hydrogène comprise entre 20% à 30%. On pourra également sélectionner pour un revêtement de l'axe du piston ou du trou d'axe la famille a-C:H avec une teneur atomique en hydrogène comprise entre 20% à 30% et pour l'autre revêtement la famille ta-C. Ces revêtements 14 ont l'avantage de présenter un bon compromis entre dureté et réduction des frottements entre les pièces.

On précise qu'une hauteur maximale d'un profil de rugosité Rz de l'axe de piston 15 est inférieure à 1 micromètre, préférentiellement inférieure à 0.7 micromètre, et une profondeur réduite des pics Rpk est inférieure à 0,12 micromètre, préférentiellement inférieure à 0.08 micromètre, et encore préférentiellement inférieure à 0,05 micromètre.

Ce point est d'autant plus important que le matériau antagoniste présente une dureté faible (cas de l'aluminium). Il est donc nécessaire d'assurer un niveau de rugosité faible au niveau du trou d'axe 22 du piston 16, afin d'optimiser le fonctionnement du couple composé du trou d'axe 22 recouvert par un revêtement 14b et de l'axe de piston 15 recouvert par un revêtement 14a, par une préparation de surface spécifique, par exemple par polissage.

Les paramètres de dépôt de la couche mince à base de carbone amorphe ont été adaptés pour permettre de revêtir les trous d'axe 22 avec une couche de revêtement 14b présentant des propriétés optimales pour l'application. Une alternative consiste à revêtir une pièce intermédiaire, par exemple une bague, qui est ensuite frettée dans le trou d'axe 22 du piston 16. En variante, la pièce intermédiaire peut se présenter sous la forme d'une plaque, ou d'une demi-lune. Avantageusement, par la mise en œuvre d'outillages adaptés, le revêtement 14b de type DLC pourra être également appliqué sur la jupe 24 du piston 16.

On décrit ci-après le procédé de dépôt du revêtement 14b sur le trou d'axe 22 du piston 16. Les trous d'axe 22 des pistons 16 en aluminium ou en acier, sont revêtus avec une couche de revêtement 14b en utilisant un montage spécifique permettant d'orienter favorablement le trou d'axe 22 du piston 16 par rapport à la source de dépôt, et de masquer les zones ne devant pas être revêtues. Ce montage peut prendre l'aspect d'un cylindre avec lumières circonférentielles.

Après nettoyage des pistons 16, ceux-ci sont mis en place sur le montage qui est chargé dans l'enceinte de dépôt sous vide. Pendant le pompage de l'air, l'enceinte et les pistons 16 sont dégazés par chauffage radiatif à une température de consigne respectant la température de revenu des pièces.

Lorsque le vide a atteint une valeur de 2.10⁻⁵ mbar, de l'argon est introduit dans l'enceinte pour atteindre une pression de l'ordre de 10⁻³ mbar, et les paramètres de décapage (puissance plasma, tension de bias) sont adaptés de manière à permettre l'élimination de la couche d'oxyde naturel des pistons 16, en particulier dans la zone confinée que représente le trou d'axe 22. Ces paramètres sont adaptés de façon à diminuer la tension sur les pièces, tout en augmentant le courant, ceci afin de diminuer la gaine cathodique.

Après décapage, une couche à gradient de propriété est déposée afin de permettre une transition optimale entre les propriétés mécaniques du matériau du piston 16 et les propriétés mécaniques du revêtement 14b proprement dit. La fin de cette couche à gradient de propriété correspond au dépôt de type carbone amorphe fonctionnel. Cette couche de carbone amorphe fonctionnelle est maintenue afin de garantir une épaisseur de l'ordre de 1 micromètre au minimum. De préférence, une épaisseur de la couche de revêtement 14b est comprise entre 1 micromètre et 3 micromètres.

En variante, le revêtement 14b pourra être tout revêtement déposé par le procédé sous vide décrit ci-dessus.

La figure 7 met en évidence que l'interface DLC/DLC entre l'axe 15 recouvert par un revêtement 14a et le trou d'axe 22 recouvert par un revêtement 14b du piston 16 favorise le glissement de ces deux éléments 15, 22 dans les zones Z1 et Z2 soumises à des forces F1 et F2 importantes appliquées par le piston 16 sur l'axe 15 lors d'un pic de pression P_g à l'intérieur d'un cylindre à la compression ou à l'explosion. La force F3 correspond à la force appliquée par la bielle 10 sur l'axe 15, dans la zone Z3.

## Revendications

1. Dispositif mécanique de transmission de mouvement (9) pour moteur thermique comportant :
- une bielle (10) comportant une tête de bielle (13) destinée à coopérer avec un maneton d'un vilebrequin et un pied de bielle (12) ayant un alésage interne (18),
- un piston (16) comportant un trou d'axe (22), et
- un axe de piston (15) inséré dans ledit trou d'axe (22) dudit piston (16) et dans ledit alésage interne (18) du pied de bielle (12) pour assurer une liaison rotative entre ladite bielle (10) et ledit piston (16), **caractérisé en ce que** l'axe de piston (15) est recouvert par un revêtement de surface (14a) à faible coefficient de frottement et le trou d'axe (22) dudit piston (16) ou une pièce rapportée interposée entre ledit axe de piston (15) et ledit trou d'axe (22) est recouvert par un revêtement de surface (14b) à faible coefficient de frottement, lesdits revêtements de surface étant à base de carbone amorphe de type DLC, au moins un desdits revêtements de surface (14a/14b) étant de la famille a-C:H avec une teneur atomique en hydrogène comprise entre 20% à 30%, et **en ce que** ledit trou d'axe (22) est poli.

2. Dispositif selon la revendication 1, **caractérisé en ce que** ledit revêtement de surface de type DLC de la famille a-C:H avec une teneur atomique en hydrogène comprise entre 20% à 30%, recouvre l'axe de piston (15).

3. Dispositif selon la revendication 1 ou la revendication 2, **caractérisé en ce que** l'axe du piston et le trou d'axe sont recouverts par des revêtements différents, l'autre revêtement de surface (14a/14b) étant à base de carbone amorphe de type DLC de la famille ta-C contenant majoritairement une structure tétraédrique avec une teneur atomique en hydrogène inférieure à 5%.

4. Dispositif selon la revendication 2 et la revendication 3, **caractérisé en ce que** ledit revêtement de surface de type DLC de la famille ta-C contenant majoritairement une structure tétraédrique avec une teneur atomique en hydrogène inférieure à 5%, recouvre le trou d'axe (22) dudit piston (16).

5. Dispositif selon l'une quelconque des revendications 1 à 4, **caractérisé en ce que** la dureté d'au moins une desdites couches de revêtement de surface (14a/14b) à faible coefficient de frottement a tendance à augmenter suivant un gradient lorsque l'on se déplace dudit piston (16) vers l'extérieur de ladite couche.

6. Dispositif selon l'une quelconque des revendications précédentes, **caractérisé en ce qu'**une hauteur maximale d'un profil de rugosité (Rz) de l'axe de piston (15) est inférieure à 1 micromètre, et préférentiellement inférieure à 0.7 micromètre.

7. Dispositif selon l'une quelconque des revendications 1 à 6, **caractérisé en ce qu'**une épaisseur de ladite couche de revêtement de surface (14) à faible coefficient de frottement est comprise entre 1 micromètre et 3 micromètres.

8. Dispositif selon l'une quelconque des revendications 1 à 7, **caractérisé en ce que** ledit piston (16) est réalisé dans un matériau à base d'acier ou à base d'aluminium.

9. Dispositif selon l'une quelconque des revendications 1 à 8, **caractérisé en ce que** ledit axe de piston (15) est réalisé dans un matériau à base d'acier.

10. Dispositif selon l'une quelconque des revendications 1 à 9, **caractérisé en ce que** ledit piston (16) comporte une jupe (24) également recouverte d'une couche de revêtement de surface (14b) à faible coefficient de frottement.

## Patentansprüche

1. Mechanische Bewegungsübertragungsvorrichtung (9) für einen Verbrennungsmotor mit:
- eine Pleuelstange (10) mit einem Pleuelkopf (13) zum Zusammenwirken mit einem Kurbelzapfen einer Kurbelwelle und einem Pleuelfuß (12) mit einer Innenbohrung (18),
- einem Kolben (16) mit einem Achsloch (22) und
- eine Kolbenachse (15), die in das Achsloch (22) des Kolbens (16) und in die Innenbohrung (18) des Pleuelfußes (12) eingesetzt ist, um eine drehbare Verbindung zwischen dem Pleuel (10) und dem Kolben (16) zu gewährleisten, **dadurch gekennzeichnet, dass** die Kolbenachse (15) durch eine Oberflächenbeschichtung (14a) abgedeckt ist Mit geringem Reibungskoeffizienten wird das Achsloch (22) des Kolbens (16) oder ein zwischen der Kolbenachse (15) und dem Achsloch (22) angeordneter Einsatz von einer Oberflächenbeschichtung (14b) mit niedrigem Reibungskoeffizienten bedeckt, wobei die Oberflächenbeschichtungen auf amorphem Kohlenstoff vom Typ DLC basieren, wobei mindestens eine der Oberflächenbeschichtungen (14a/14b) der a-C:H-Familie mit einem Atomgehalt an Wasserstoff zwischen 20% und 30% angehört und dass das Achsenloch (22) poliert ist.

2. Vorrichtung nach Anspruch 1, **dadurch gekennzeichnet, dass** die DLC-Oberflächenbeschichtung der Familie a-C:H mit einem atomaren Wasserstoffgehalt von 20% bis 30% die Kolbenachse (15) bedeckt.

3. Vorrichtung nach Anspruch 1 oder 2, **dadurch gekennzeichnet, dass** die Kolbenachse und das Bolzenloch mit unterschiedlichen Beschichtungen bedeckt sind, wobei die andere Oberflächenbeschichtung (14a/14b) aus amorphem Kohlenstoff vom Typ DLC der ta-C-Familie besteht, der mehrheitlich eine tetraedrische Struktur mit einem Atomgehalt an Wasserstoff von weniger als 5 % enthält.

4. Vorrichtung nach Anspruch 2 und Anspruch 3, **dadurch gekennzeichnet, dass** die Oberflächenbeschichtung vom DLC-Typ der ta-C-Familie, die mehrheitlich eine tetraedrische Struktur mit einem atomaren Wasserstoffgehalt von weniger als 5% enthält, das Achsloch (22) des Kolbens (16) bedeckt.

5. Vorrichtung nach einem der Ansprüche 1 bis 4, **dadurch gekennzeichnet, dass** die Härte mindestens einer der Oberflächenbeschichtungsschichten (14a/14b) mit niedrigem Reibungskoeffizienten in einem Gradienten ansteigt, wenn sich der Kolben (16) aus der Schicht heraus bewegt.

6. Vorrichtung nach einem der vorhergehenden Ansprüche, **dadurch gekennzeichnet, dass** eine maximale Höhe eines Rauhigkeitsprofils (Rz) der Kolbenachse (15) kleiner als 1 Mikrometer und vorzugsweise kleiner als 0,7 Mikrometer ist.

7. Vorrichtung nach einem der Ansprüche 1 bis 6, **dadurch gekennzeichnet, dass** eine Dicke der Oberflächenbeschichtungsschicht (14) mit niedrigem Reibungskoeffizienten zwischen 1 µm und 3 µm liegt.

8. Vorrichtung nach einem der Ansprüche 1 bis 7, **dadurch gekennzeichnet, dass** der Kolben (16) aus einem Material auf Stahl- oder Aluminiumbasis besteht.

9. Vorrichtung nach einem der Ansprüche 1 bis 8, **dadurch gekennzeichnet, dass** die Kolbenachse (15) aus einem Material auf Stahlbasis besteht.

10. Vorrichtung nach einem der Ansprüche 1 bis 9, **dadurch gekennzeichnet, dass** der Kolben (16) eine Schürze (24) aufweist, die ebenfalls mit einer Oberflächenbeschichtungsschicht (14b) mit niedrigem Reibungskoeffizienten bedeckt ist.

## Claims

1. Mechanical movement transmission device (9) for thermal engine comprising:
- a connecting rod (10) with a connecting rod head (13) intended to cooperate with a crank pin of a crankshaft and a rod foot (12) with an internal bore (18),
- a piston (16) with an axis hole (22), and
- a piston axis (15) inserted in the said pin hole (22) of the said piston (16) and in the said internal bore (18) of the rod foot (12) to ensure a rotating link between the said rod (10) and the said piston (16), **characterized in that** the piston axis (15) is covered by a surface coating (14a) with a low friction coefficient and the axis hole (22) of the said piston (16) or an attached part interposed between the said piston axis (15) and the said axis hole (22) is covered by a surface coating (14b) with a low friction coefficient, the surface coatings being of amorphous carbon type DLC, at least one of the said surface coatings (14a/14b) being of a-C:H family with an atomic hydrogen content between 20% and 30%, and **in that** said axis hole (22) is polished.

2. Device according to Claim 1, **characterized in that** the said DLC surface coating of the a-C:H family with an atomic hydrogen content between 20% and 30%, covers the piston axis (15).

3. A device according to Claim 1 or Claim 2, **characterized in that** the piston axis and the axis hole are covered by different coatings, the other surface coating (14a/14b) being based on DLC type amorphous carbon of the ta-C family containing predominantly a tetrahedral structure with an atomic hydrogen content of less than 5%.

4. A device according to Claim 2 and Claim 3, **characterized in that** the said DLC surface coating of the ta-C family containing predominantly a tetrahedral structure with an atomic hydrogen content of less than 5%, covers the axis hole (22) of the said piston (16).

5. A device according to any of claims 1 to 4, **characterized in that** the hardness of at least one of the said surface layers (14a/14b) with a low friction coefficient tends to increase by a gradient when the piston (16) is moved outwards of the said layer.

6. A device according to any of the preceding claims, **characterized in that** a maximum height of a roughness profile (Rz) of the piston axis (15) is less than 1 micrometer, and preferably less than 0.7 micrometer.

7. A device according to any of the claims 1 to 6, **characterized in that** a thickness of the said surface coating layer (14) with a low friction coefficient is between 1 micrometer and 3 micrometers.

8. Device according to any of claims 1 to 7, **characterized in that** the said piston (16) is made of steel or aluminum material.

9. Device according to any of claims 1 to 8, **characterized in that** the said piston axis (15) is made of steel-based material.

10. A device according to any of the claims 1 to 9, **characterized in that** the piston (16) has a skirt (24) also covered with a surface coating layer (14b) with a low friction coefficient.
